# FASCICULE DE BREVET EUROPEEN

(11) **EP 2 763 527 B1**
(45) Date de publication et mention de la délivrance du brevet: **03.01.2018**
(21) Numéro de dépôt: 11788545.9
(22) Date de dépôt: 04.10.2011
(51) Int. Cl.: A01P 3/00, A01N 31/16, A01N 65/00, A01N 65/28, A01N 43/54, A23L 3/3472, A23L 3/349, A23L 3/3499, A23L 3/3544, A23L 3/3526

(54) **PROCÉDÉ DE TRAITEMENT FONGICIDE DE SOUCHES RÉSISTANTES AU MOYEN D'HUILE(S) ESSENTIELLE(S)**
VERFAHREN ZUR FUNGIZIDEN BEHANDLUNG VON RESISTENTEN STÄMMEN UNTER VERWENDUNG EINES ODER MEHRERER ÄTHERISCHER ÖLE
METHOD FOR THE FUNGICIDAL TREATMENT OF RESISTANT STRAINS USING ONE OR MORE ESSENTIAL OILS

(43) Date de publication de la demande: 13.08.2014
(73) Titulaire: Xeda International, 13670 Saint Andiol (FR)
(72) Inventeur: SARDO, Alberto, F-13160 Chateaurenard (FR)
(74) Mandataire: Lavoix
(86) Numéro de dépôt international: PCT/FR2011/052315
(87) Numéro de publication internationale: WO 2013/050662

(56) Documents cités:
- EP-A1- 1 854 353
- J.H. KIM ET AL: "Use of chemosensitization to overcome fludioxonil resistance in Penicillium expansum", LETTERS IN APPLIED MICROBIOLOGY, 1 juin 2010 (2010-06-01), pages no-no, XP55035041, ISSN: 0266-8254, DOI: 10.1111/j.1472-765X.2010.02875.x
- PALANIAPPAN KAVITHA ET AL: "Use of natural antimicrobials to increase antibiotic susceptibility of drug resistant bacteria", INTERNATIONAL JOURNAL OF FOOD MICROBIOLOGY, ELSEVIER SCIENCE PUBLISHERS, AMSTERDAM, NL, vol. 140, no. 2-3, 15 juin 2010 (2010-06-15), pages 164-168, XP002624024, ISSN: 0168-1605, DOI: 10.1016/J.IJFOODMICRO.2010.04.001 [extrait le 2010-04-13]
- KIM J H ET AL: "Augmenting the activity of antifungal agents against aspergilli using structural analogues of benzoic acid as chemosensitizing agents", FUNGAL BIOLOGY, ELSEVIER, AMSTERDAM, NL, vol. 114, no. 10, 1 octobre 2010 (2010-10-01), pages 817-824, XP027401779, ISSN: 1878-6146 [extrait le 2010-08-06]
- JONG H. KIM ET AL: "Chemosensitization of fungal pathogens to antimicrobial agents using benzo analogs", FEMS MICROBIOLOGY LETTERS, vol. 281, no. 1, 1 avril 2008 (2008-04-01) , pages 64-72, XP55003054, ISSN: 0378-1097, DOI: 10.1111/j.1574-6968.2008.01072.x
- N.C.G. FARIA ET AL: "Enhanced activity of antifungal drugs using natural phenolics against yeast strains of Candida and Cryptococcus", LETTERS IN APPLIED MICROBIOLOGY, vol. 52, no. 5, 14 mars 2011 (2011-03-14), pages 506-513, XP55035035, ISSN: 0266-8254, DOI: 10.1111/j.1472-765X.2011.03032.x
- MONTES-BELMONT R ET AL: "CONTROL OF ASPERGILLUS FLAVUS IN MAIZE WITH PLANT ESSENTIAL OILS AND THEIR COMPONENTS", JOURNAL OF FOOD PROTECTION, INTERNATIONAL ASSOCIATION FOR FOOD PROTECTION, US, vol. 61, no. 5, 1 janvier 1998 (1998-01-01), pages 616-619, XP000886016, ISSN: 0362-028X

## Description

La présente invention concerne un procédé de traitement de plantes ou denrées alimentaires, notamment de fruits et/ou de légumes. En effet, il importe que les plantes puissent résister aux attaques des champignons et des bactéries qui réduisent les quantités ainsi que la qualité des plantes ou denrées alimentaires produites et qui, dans les cas extrêmes, peuvent notamment entraîner la mort des plantes infectées. Il importe également que les fruits et légumes ne perdent pas leur qualité organoleptique et conservent un aspect engageant lors de leur mise sur le marché pour une consommation rapide. Or, après leur récolte, les fruits et légumes sont couramment stockés pendant des périodes relativement longues avant d'être mis sur le marché. Les phénomènes susceptibles d'altérer l'aspect et le goût des fruits et légumes sont notamment la prolifération de champignons et de bactéries à leur surface avant et/ou après récolte. Ces détériorations sont encore plus rapides au niveau des micro-blessures et des entailles apparaissant sur la peau au cours du stockage ou de la manipulation des fruits et légumes.

Afin d'éviter de telles détériorations, les fruits et/ou légumes sont généralement traités par application de fongicides et/ou bactéricides.

Cependant, les champignons et les bactéries développent des résistances aux fongicides et/ou aux bactéricides de synthèse classiquement utilisés.

Ainsi, il est connu que de nombreux genres de champignons tels que les Penicillium ont développé des résistances, vis-vis des benzimidazoles par exemple.

La résistance aux fongicides/bactéricides se développe lorsque quelques souches sont naturellement résistantes ou deviennent résistantes, par exemple par mutation de leur ADN, et sont ensuite sélectionnées par l'application des fongicides/bactéricides. La population s'enrichit alors au fur et à mesure de ces souches résistantes.

Il existe donc un besoin de trouver des moyens de traitement alternatifs de ces souches de champignons et/ou de bactéries résistantes.

On connaît l'activité fongicide et/ou bactéricide des huiles essentielles. Ainsi, la demande de brevet FR 2 786 664 décrit l'activité fongicide et bactéricide de différents terpènes contenus dans des huiles essentielles. Kim et al. (Letters in Applied Microbiology, 2010, 51, 177-183) décrit l'utilisation de thymol et de fluodioxonil afin de réduire la résistance au fludioxonil de *Penicillium expansum,* responsable de la pourriture des pommes après récolte. K. Palaniappan et al. (International Journal of Food Microbiology, 2010, 2-3, 164-168) décrit l'utilisation d'agents antibiotiques naturels tels que l'eugénol, le thymol ou le carvacrol en combinaison avec un antibiotique auquel des souches bactériennes sont résistantes, pour la préservation de la nourriture animale.

De façon surprenante, il a été trouvé que les huiles essentielles ont une activité spécifique sur les souches de champignons et/ou de bactéries résistantes aux fongicides et/ou bactéricides de synthèse.
Il est donc décrit un procédé de traitement fongicide et/ou bactéricide d'une ou plusieurs souche(s) de champignon(s) et/ou bactérie(s) phytopathogène(s) résistante(s) à un ou plusieurs agent(s) fongicide(s) et/ou bactéricide(s) de synthèse comprenant l'application d'une composition comprenant une ou plusieurs huile(s) essentielle(s) et/ou le(s) agent(s) actif(s) terpénique(s) qu'elle(s) contien(nen)t sur des plantes ou denrées alimentaires atteintes par une dite souche.
L'invention a pour objet un procédé de traitement fongicide d'une ou plusieurs souche(s) de champignon(s) phytopathogène(s) résistante(s) à un ou plusieurs agent(s) fongicide(s) de synthèse comprenant :
   - l'application d'une composition comprenant à titre d'huile essentielle l'huile de girofle et/ou à titre d'agent actif terpénique qu'elle contient l'eugénol, et
   - l'application de pyriméthanil à titre d'agent fongicide auquel la(es) souche(s) est(sont) résistante(s),
sur des plantes ou denrées alimentaires atteintes par une dite souche.

Les plantes ou denrées alimentaires font notamment référence aux plants et à leurs récoltes, et notamment aux fruits et légumes, avant et après récolte.

On entend par « huile essentielle » tout produit, généralement odorant et de composition complexe, obtenu à partir d'une matière première végétale, notamment soit par entraînement par la vapeur d'eau, soit par distillation sèche, ou par un procédé mécanique approprié sans chauffage.

Les huiles essentielles sont le plus souvent séparées de la phase aqueuse par un procédé physique n'entraînant pas de changement significatif de leur composition. Leur préparation est effectuée selon des procédés connus de l'homme du métier.

A titre d'huiles essentielles, il est décrit notamment l'huile de girofle, l'huile de cannelle, l'huile de thym, l'huile d'origan ou l'huile de menthe; à titre d'agents actifs terpéniques contenus dans lesdites huiles essentielles il est décritl'eugénol, l'isoeugénol, le cinnamaldéhyde, le thymol, le carvacrol ou la carvone.

Il est également décrit une composition comprenant un mélange de thymol, de carvacrol et d'eugénol.

Il est entendu que lesdits agents actifs terpéniques peuvent être isolés des huiles essentielles ou être préparés par synthèse ou hémisynthèse.

On entend par « souches résistantes », des souches de champignons et/ou de bactéries peu ou pas sensibles à un agent fongicide et/ou bactéricide ; par exemple, les souches pour lesquelles l'application de fongicides et/ou de bactéricides ne détruit qu'à hauteur de 60% ou moins lesdites souches. Cette résistance peut être présente naturellement ou résulter d'une mutation génétique.

A titre de fongicides et/ou bactéricides de synthèse, on entend les agents qui ne sont pas issus de produits naturels tels que les plantes ; cette expression exclut donc les agents actifs terpéniques contenus dans lesdites huiles essentielles. A titre de fongicides et/ou bactéricides de synthèse pouvant engendrer des résistances, on peut citer :
A titre de fongicides, les benzimidazoles tels que le thiabendazole, ou leurs précurseurs tels que les thiophanates ; les anillopyrimidines tels que le pyriméthanil ; les imidazoles tels que l'imazalil ; les phénylamides tels que le métaxalyl ; les hétérocycles azotés tels que le fludioxonyl.

A titre de fongicides/bactéricides, les phénols ; les ammonium quaternaires tels que le chlorure d'alkyle diméthyl benzyl ammonium ou l'acide peracétique.

Comme exemple de champignon(s) phytopathogène(s) présentant une(des) résistante(s) à un ou plusieurs agent(s) fongicide(s) et/ou bactéricide(s) de synthèse, on peut notamment citer les genres *Penicillium, Botrytis, Monilinia, Gloeosporium, Phytophtora, Fusarium, Alternaria, Geotrichum, Venturia, Rhizopus, Phoma, Helminthosporium ;* et plus particulièrement les espèces *Penicillium spp,* dont *Penicillium digitatum, Penicillium expansum,* ou *Penicillium italicum ; Botrytis spp.* dont *Botrytis cinerea, Monilinia spp.* dont *Monilinia fructicola, Monilinia fructigena ou Monilinia laxa* ; *Gloeosporium spp.* dont *Gloeosporium album, Gloeosporium fructigenum ou Gloeosporium perennans ; Phytophtora spp ; Fusarium spp.* ou encore *Alternaria alternata ; Geotrichum candidum ; Venturia inequalis ; Rhizopus nigricans ; Phoma exigua* ou *Helminthosporium Rhizoctonia solani.*

Comme exemple de bactérie(s) phytopathogène(s) présentant une(des) résistance(s) à un ou plusieurs agent(s) fongicide(s) et/ou bactéricide(s) de synthèse, il est décrit *Pseudomonas syringae, Escherichia coli, Erwinia amylovora* ou *Erwinia carotovora.*

Plus particulièrement, *Penicillium spp.* présente des souches résistantes à l'imazalil ; *Penicillium digitatum et Penicillium expansum* présentent des souches résistantes au pyriméthanil ; *Pseudomonas syringae* présente des souches résistantes aux ammonium quaternaires ; *Botrytis cinerea* possède des souches résistantes aux benzimidazoles ; *Monilinia fructicola* présente des souches résistantes au pyriméthanil.

Sans vouloir être lié par une théorie, il a été découvert de façon inattendue que les huiles essentielles qui peuvent avoir une activité fongicide et/ou bactéricide modeste sur des souches sensibles deviennent très actives sur des souches résistantes. Les huiles essentielles ont probablement une activité multisite et de fait ne donnent pas lieu à la création de souches résistantes. De fait, leurs combinaisons avec des agents de synthèse permettent d'éviter ainsi une sélection génétique aboutissant au développement de souches résistantes.

De façon avantageuse, la(les) huile(s) essentielle(s) et/ou le(s) agent(s) actif(s) terpénique(s) qu'elle(s) contien(nen)t peuvent être utilisées en combinaison avec un ou plusieurs agent(s) fongicide(s) et/ou bactéricide(s). Non seulement cette combinaison permet de traiter à la fois les souches résistantes et les souches sensibles, mais il a également été découvert de façon inattendue que l'activité sur les souches résistantes était ainsi potentialisée grâce à cette combinaison.

De préférence, l'(les) huile(s) essentielle(s) et l'(es) agent(s) fongicide(s) et/ou bactéricide(s) sont appliqués dans un rapport (part huile(s) essentielle(s) / part agent(s) fongicide(s) et/ou bactéricide(s)) compris entre 0,3 et 3.

Généralement, le(s)dit(s) agent(s) fongicide(s) et/ou bactéricide(s) est(sont) celui(ceux) auquel(auxquels) la souche est résistante, tels que ceux précités.

Parmi des exemples de combinaisons décrites, on trouve notamment :
- l'imazalil et le thymol et/ou l'huile de thym,
- le carvacrol et/ou l'huile d'origan et le thiabendazole,
- le chlorure d'alkyle diméthyl benzyl ammonium et l'huile de cannelle.

Selon un mode de réalisation préféré, l'(les)agent(s) fongicide(s) et/ou bactéricide(s) est(sont) appliqué(s) simultanément à(aux) l'huile(s) essentielle(s) et/ou au(x) agent(s) actif(s) terpénique(s) qu'elle(s) contien(nen)t, comme par exemple au sein d'une même composition, ou de façon séparée au moyen de compositions distinctes.

L'application des compositions selon l'invention peut être réalisée avant ou après récolte.

Généralement, les compositions selon l'invention se présentent sous la forme d'un concentré émulsionnable, qui peut être dispersé dans l'eau avant application. Plus particulièrement, le concentré émulsionnable comprend notamment une ou plusieurs huile(s) essentielle(s) et/ou le(s) agent(s) actif(s) terpénique(s) qu'elle(s) contien(nen)t, avec de la lécithine et/ou dérivés. Le concentré émulsionable peut comprendre entre outre un ou plusieurs émulsifiants. Généralement, le concentré émilsionnable consiste en une ou plusieurs huile(s) essentielle(s) et/ou le(s) agent(s) actif(s) terpénique(s) qu'elle(s) contien(nen)t, de la lécithine et/ou dérivés, et éventuellement un ou plusieurs émulsifiants.

Selon l'invention, on entend par l'expression "lécithines et/ou dérivés" un ou plusieurs composés choisis parmi les dérivés de phosphatidylcholine et/ou ses dérivés, tels que phosphatidylcholine, phosphatidylinositol, phosphatidyl-éthanolamine et/ou acide phosphatidique, et/ou leurs mélanges présentant deux acides gras, tels que distéaryl-, dipalmityl- et/ou dioléyl- de phosphatidylcholine, phosphatidylinositol, phosphatidyléthanolamine et/ou acide phosphatidique, et/ou leurs mélanges.

Préférentiellement, les "lécithines et/ou dérivés" sont d'origine naturelle, tels que, par exemple, issus du jaune d'oeuf ou du soja.

Préférentiellement le rapport lécithine/huile essentielle ou agent terpénique est compris entre 0,3 et 3 / 1 en poids.

On entend par émulsifiants des agents émulsionnants ioniques et non ioniques, tels que les surfactants non ioniques du type acide gras éthoxylé, alcool gras ethoxylé, tween 80, etc... Ces émulsionnants sont connus en soi. Selon la présente invention, on entend par "émulsionnant" tout type d'agent habituellement utilisé à cet effet, tels que les alcools gras éthoxylés, les acides gras éthoxylés, les alkylphénols éthoxylés ou tout autre produit non ionique.

Les émulsionnants préférablement utilisés dans le cadre de l'invention sont des tensioactifs anioniques ou non ioniques.

Des exemples de tensioactifs non ioniques utilisables selon l'invention sont notamment le produit de condensation d'un alcool gras aliphatique, de préférence en C₈-C₂₂, avec un oxyde d'alkylène en C₂-C₃. L'oxyde d'alkylène en C₂-C₃ peut être l'oxyde d'éthylène, l'oxyde de propylène, ou bien un mélange d'oxyde d'éthylène et d'oxyde de propylène dans des proportions quelconques. Un exemple de tels tensioactifs est le produit de condensation de l'alcool laurylique (ou alcool n-dodécyclique) avec 30 moles d'oxyde d'éthylène.

Les émulsionnants non ioniques incluent notamment les sucroesters, les sorbitans monoléate éthoxylés, les acides gras éthoxylés, la lécithine, les acides gras estérifiés tels que l'oléate de glycérol et leurs mélanges.

L'invention n'est cependant pas limitée à l'utilisation de ces émulsionnants particuliers.

Dans les compositions selon l'invention, les émulsifiants non ioniques sont présents généralement entre 1 et 350 g/L, préférentiellement entre 200 et 300 g/L.

Dans les compositions selon l'invention, les émulsifiants anioniques sont généralement présents entre 1 et 300 g/L, préférentiellement entre 100 et 200 g/L.

Dans les compositions selon l'invention, les huiles sont présentes entre 50 et 350 g/L.

Dans les compositions selon l'invention, les agents terpéniques sont présents entre 20 et 250 g/L.

Dans les compositions selon l'invention, les fongicides et/ou bactéricides sont présents entre 0 et 300 g/L.

Une composition préférée selon l'invention comprend notamment:
- entre 0 et 250 g/L de pyriméthanil,
- entre 20 et 200g/L d'eugénol,
- entre 20 et 200g/L de lécithine.

Elle peut comprendre entre outre d'autres excipients tels des agents solubilisant, par exemple, l'acide organique ainsi que des excipients servant à masquer l'odeur de la composition tel que l'huile de menthe.

Les concentrés émulsionnables peuvent être dispersés dans de l'eau afin d'obtenir une dilution des concentrés émulsionnables. La dilution des compositions selon l'invention se fait à hauteur de 0,5 à 2 % dans l'eau.

Les compositions en g/L indiqués ci-dessus et ci-après s'entendent avant dilution éventuelle.

Généralement, dans le procédé selon l'invention, l'application de la composition se fait par aspersion, immersion ou douchage sur des plantes et/ou denrées alimentaires telles que les fruits et/ou légumes. De façon préférée l'application se fait par immersion ou douchage des fruits et/ou légumes dans le concentré émulsionnable dispersé dans de l'eau.

Selon un autre mode de réalisation, les compositions selon l'invention peuvent être dispersées dans des cires d'enrobage des fruits et/ou légumes.

L'application par douchage ou immersion convient particulièrement pour l'application en post récolte.

Généralement, la composition après dilution est appliquée en quantité permettant l'application de l'agent fongicide et/ou bactéricide à ses doses habituelles, connues de l'homme du métier ou à des doses inférieures.

Enfin, il est décrit l'utilisation d'une huile essentielle pour le traitement sélectif d'une ou plusieurs souche(s) de champignon(s) et/ou bactérie(s) phytopathogène(s) résistante(s) à un ou plusieurs agent(s) fongicide(s) et/ou bactéricide(s).

Les modes de réalisation discutés ci-avant et ci-après s'entendent pris isolément ou en chacune de leurs combinaisons.

### Description des figures :

La figure 1 montre l'efficacité des combinaisons de l'invention sur des souches de *Penicillium expansum* résistantes au pyriméthanil.
La figure 2 montre l'efficacité des compositions sur des souches de *Penicillium digitatum* sensibles au pyriméthanil.

### Exemples :

### Exemple 1 : Exemple d'une composition pour l'utilisation selon l'invention

**Concentré émulsionnable (en g/L)**

| | |
|---|---|
| Emulsifiant non ionique | 240 |
| Emulsifiant anionique | 180 |
| Huiles essentielles | 160 |
| Pyrimethanil | 190 |
| Lécithine | 60 |
| Monopropylène glycol | 200 |

### Exemple 2 : Activité fongicide des huiles essentielles seules ou en combinaison avec un fongicide de synthèse, sur souches résistantes ou sensibles

Le tableau ci-dessous présente différentes compositions fongicides et/ou bactéricides

| **Composition** | **A** | **B** | **C** |
|---|---|---|---|
| Pyriméthanil | 400 g/L | 192 g/L | - |
| Huile essentielle/ Agent terpénique | - | 140 g/L d'eugénol | 180 g/L d'eugénol |
| | - | 20 g/L d'huile de menthe | |
| Lécithine | - | 60 g/L | 250 g/L |
| Total | 1000 mL | 1000 mL | 1000 mL |

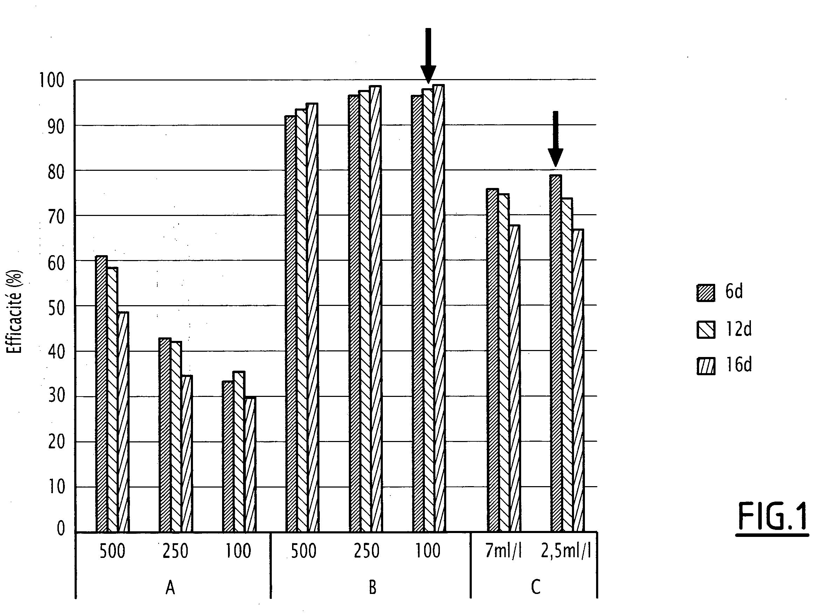

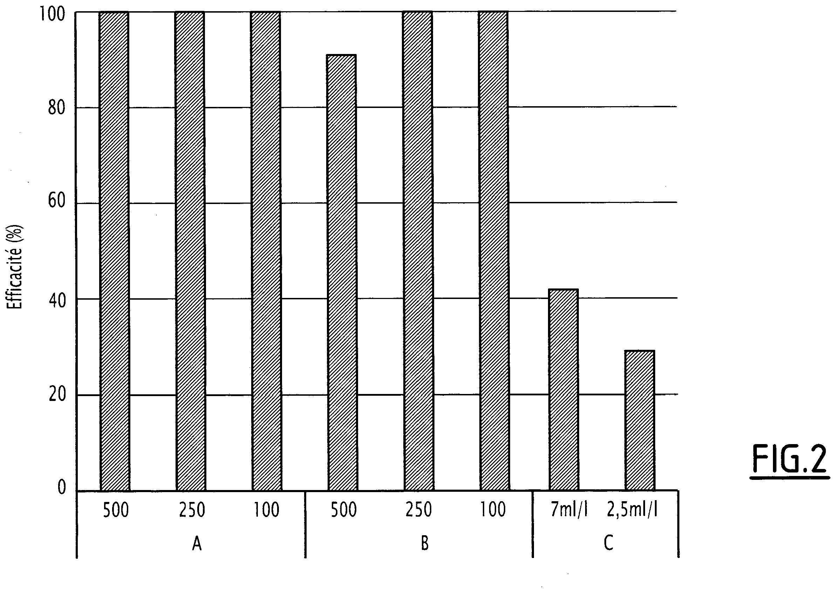

Ces compositions ont été testées sur différentes souches de champignons ou bactéries, tel qu'illustré par les figures 1 et 2. Sauf indication contraire, les doses exprimées dans les Figures 1 et 2 sont exprimées en ppm de matière active ; les indications en ml/l s'entendent en quantité de la composition C.
Sur la Figure 1 (test sur des pommes « gala »), la composition B, comprenant du pyriméthanil, de l'eugénol et de l'huile de menthe présente une efficacité entre 90 et 100% tandis que le pyriméthanil seul à la même dose montre une efficacité d'au maximum 60%. On voit également que l'huile de girofle seule (composition C) ne dépasse pas 80% d'efficacité. On observe bien un effet synergique entre le fongicide et les huiles essentielles/agents terpéniques.

Sur la Figure 2 (tests sur des citrons), on observe sur des souches *Penicillium digitatum* sensibles au pyriméthanil, l'efficacité de la composition comprenant du pyriméthanil et des huiles essentielles/agents terpéniques (composition B). De plus, on voit bien que les huiles essentielles/agents terpéniques seuls (composition C) ne sont pas efficaces sur les souches sensibles, avec une efficacité maximale à environ 40%.

### Exemple 3 : Evaluation de l'efficacité in vitro des huiles essentielles contre des micro-organismes phyto-patogènes.

### Objectif de l'étude:

L'objectif de l'étude est de déterminer l'efficacité des huiles essentielles contre les champignons phyto-patogènes *Penicillium Spp., Botrytis Spp., Monilinia fructicola* et une bactérie, *Pseudonomas syringae,* comparée à des produits fongicides et bactéricides de synthèse commerciaux.

L'efficacité des échantillons d'huiles essentielles contre ces micro-organismes phyto-patogènes a été déterminée au moyen de comptage de colonies (détermination CFU), cultivées à 25°C +/- 1°C pour les bactéries et par détermination de l'inhibition de la croissance du halo pour les champignons, en accord avec les directives générales (ISO 6887 :2003 ; ISO 7218 :2007 ; ISO 7954 :1987).

### Echantillons testés:

| **Traitement** | **Ingrédient(s) actif(s)** | **Contenu en ingrédient actif** | **Type de formulation** |
|---|---|---|---|
| Fungazil 500 EC | Imazalil | 50% | EC |
| TECTO SC 500 | Tiabendazole | 42,9% | SC |
| Major C 100 | Chlorure d'alkyle diméthyl benzyl ammonium | 2,5% | SL |
| Xedathane 20 | Pyrimethanil | 20% | EC |
| Bioxeda | Huile de girofle | 20% | EC |
| Thymol | Thymol | 18% | EC |
| Carvacrol | Carvacrol | 18% | EC |
| Huile de cannelle | Cinnamaldehyde | 20% | EC |

### Descriptif des test effectués:

| **Champignon phytopathogène** | **Echantillon** | **Doses** | **Application** | **Durée** | **Evaluation de l'efficacité** |
|---|---|---|---|---|---|
| *Pennicillum spp.* | 1)Fungazil | **Fungazil:** 100ml/hl | Par ajout dans le milieu artificiel PDA (dextrose agar de pomme de terre) | 5 jours | Inhibition de croissance sur boîtes de Petri |
| | 2)Thymol | **Thymol:** | | | |
| | | 100ml/hl | | | |
| | | 300 ml/hl | | | |
| | | 500 ml/hl | | | |
| | | 1000 ml/hl | | | |
| | 3)Fungazil + Thymol | **Funqazil + Thymol:** | | | |
| | | 100ml/hl+ | | | |
| | | 100ml/hl | | | |
| | | 100ml/hl+ | | | |
| | | 300 ml/hl | | | |
| | | 100ml/hl+ | | | |
| | | 500 ml/hl | | | |
| | | 100ml/hl+ | | | |
| | | 1000 ml/hl | | | |

| **Champignon phytopathogène** | **Echantillon** | **Doses** | **Application** | **Durée** | **Evaluation de l'efficacité** |
|---|---|---|---|---|---|
| *Botrytis spp.* | 1)Tecto SC 500 | **Tecto SC 500:** 100 ml/hl | Par ajout dans le milieu artificiel PDA (dextrose agar de pomme de terre) | 5 jours | Inhibition de croissance sur boîtes de Petri |
| | 2)Carvacrol | **Carvacrol** : | | | |
| | | 100ml/hl | | | |
| | | 300 ml/hl | | | |
| | | 500 ml/hl | | | |
| | | 1000 ml/hl | | | |
| | 3)Tecto SC 500 + Carvacrol | **Tecto SC 500 +** **Carvacrol** : | | | |
| | | 100ml/hl+ 100ml/hl | | | |
| | | 100ml/hl+ 300 ml/hl | | | |
| | | 100ml/hl+ 500 ml/hl | | | |
| | | 100ml/hl+ 1000 ml/hl | | | |

| **Champignon phytopathogène** | **Echantillon** | **Doses** | **Application** | **Durée** | **Evaluation de l'efficacité** |
|---|---|---|---|---|---|
| *Monilinia fructicola* | 1)Xedathane 20 | **Xedathan** | Par ajout dans le milieu artificiel PDA (dextrose agar de pomme de terre) | 5 days | Growth inhibition on Petri dishes |
| | | **e 20:** | | | |
| | | 250 ml/hl | | | |
| | 2)Bioxeda | **Bioxeda:** | | | |
| | | 100ml/hl | | | |
| | | 300 ml/hl | | | |
| | | 500 ml/hl | | | |
| | | 1000 ml/hl | | | |
| | 3)Xedathane 20 + Bioxeda | **Xedathan** | | | |
| | | **e 20 +** | | | |
| | | **Bioxeda:** | | | |
| | | 250ml/hl+ | | | |
| | | 100ml/hl | | | |
| | | 250ml/hl+ 300 ml/hl | | | |
| | | 250ml/hl+ 500 ml/hl | | | |
| | | 250ml/hl+ 1000 ml/hl | | | |

| **Bactérie Phytopathogèn e** | **Echantillon** | **Doses** | **application** | **Durée** | **Evaluation de l'efficacité** |
|---|---|---|---|---|---|
| *Pseudomonas syringae.* | 1)Major C 100 | **Major C** | Par ajout dans le milieu artificiel NA (agar nutitif) | 24 heures | determinatio n CFU |
| | | **100:** | | | |
| | | 250ml/hl | | | |
| | 2)Cynnamo mun oil | | | | |
| | | **Cynnamo** | | | |
| | | **mum oil:** | | | |
| | | 100ml/hl | | | |
| | | 300 ml/hl | | | |
| | | 500 ml/hl | | | |
| | | 1000 ml/hl | | | |
| | 3)Major C 100 + Cynnamomu m oil | **Major** | | | |
| | | **C100+** | | | |
| | | **Cinnamo** | | | |
| | | **mum oil** | | | |
| | | 250ml/hl+ | | | |
| | | 100ml/hl | | | |
| | | 250ml/hl+ | | | |
| | | 300 ml/hl | | | |
| | | 250ml/hl+ | | | |
| | | 500 ml/hl | | | |
| | | 250ml/hl+ | | | |
| | | 1000 ml/hl | | | |

### Descriptif des méthodes:

| Microrganisme | Methode | Diluent | Milieu de culture | Réplicats | Conditions croissance | Incubation |
|---|---|---|---|---|---|---|
| *1) Penicillium spp.* | Ensemencement | Solution Physiologique | PDA, Pseudomonas Agar (seulement pour P. syringae) | 4 | 25°C ± 1°C | Champig nons: 5/6 jours Bactéries: 24h |
| *2) Botrytis spp.* | | | | | | |
| *3) Monilinia fructicola* | | | | | | |
| *4) Pseudomonas syringae* | | | | | | |

### Analyse:

Les échantillons ont été ajoutés au milieu artificiel et mélangés doucement avant solidification de la solution d'Agar.

### Efficacité contre les champignons:

Une petite quantité des spores de champignons est placée au centre du dextrose d'Agar de pomme-de-terre (PDA) des boîtes de pétri à 25°+ 1° C pendant 5/6 jours. A la fin de l'incubation on mesure l'inhibition du halo formé comparé aux boîtes de pétri PDA non traitées (contrôle).

### Efficacité contre les bactéries:

Une suspension de spores des micro-organismes phyto-pathogènes est préparée et une quantité appropriée des dilutions d'intérêt (100 microlitres) est ajoutée dans les boîtes de pétri d'Agar de Pseudonomas et triturée en surface de l'Agar au moyen d'une spatule « L » stérile.

Les boîtes de pétri sont incubées à 25° C °± 1° C pendant 24 heures. A la fin de l'incubation on détermine les unités formant colonie (CFU/ml de produit).

### Evaluation des résultats:

Les résultats sont indiqués en tant que pourcentage de l'incidence de la maladie et pourcentage d'efficacité des produits testés.

### Penicillium spp.

Echantillons:
▪ Fungazil
▪ Thymol
▪ Fungazil +thymol

| **Champignon Phytopathogène** | **Echantillon** | **Incidence de la maladie (%)** | **Efficacité (%)** | **Dose ml/hl** |
|---|---|---|---|---|
| *Pennicillum spp.* | *Non traité* | 100 | 0 | |
| | Fungazil (imazalil) | 5 | 95 | 100ml/hl |
| | Thymol | 80 | 20 | 100ml/hl |
| | | 50 | 50 | 300 ml/hl |
| | | 30 | 70 | 500 ml/hl |
| | | 30 | 70 | 1000 ml/hl |
| | Fungazil+ Thymol | 0 | 100 | 100 +100ml/hl |
| | | 0 | 100 | 100 +300 ml/hl |
| | | 0 | 100 | 100 +500 ml/hl |
| | | 0 | 100 | 100 +1000 ml/hl |

### Penicillium spp. -Souche résistante à l'Imazalil

Echantillons:
▪ Fungazil
▪ Thymol
▪ Fungazil +thymol
▪

| **Champignon Phytopathogène** | **Echantillon** | **Incidence de la maladie (%)** | **Efficacité (%)** | **Dose ml/hl** |
|---|---|---|---|---|
| *Pennicillum spp. Souche résistante à l'Imazalil* | *Non traité* | 100 | 0 | |
| | Fungazil | 85 | 15 | 100ml/hl |
| | Thymol | 30 | 70 | 100ml/hl |
| | | 30 | 70 | 300 ml/hl |
| | | 20 | 80 | 500 ml/hl |
| | | 10 | 90 | 1000 ml/hl |
| | Fungazil + Thymol | 10 | 90 | 100 +100ml/hl |
| | | 10 | 90 | 100 +300 ml/hl |
| | | 5 | 95 | 100 +500 ml/hl |
| | | 0 | 100 | 100 +1000 ml/hl |

### Botrytis spp. - Souche résistante au Thiabendazole

Echantillons:
▪ Tecto SC 500
▪ Carvacrol
▪ Tecto SC 500+ Carvacrol

| **Champignon Phytopathogène** | **Echantillon** | **Incidence de la maladie (%)** | **Efficacité (%)** | **Dose ml/hl** |
|---|---|---|---|---|
| *Botryitis spp. Souche résistante au TBZ* | *Non traité* | 100 | 0 | |
| | TBZ | 100 | 0 | 100ml/hl |
| | Carvacrol | 0 | 100 | 100ml/hl |
| | | 0 | 100 | 300 ml/hl |
| | | 0 | 100 | 500 ml/hl |
| | | 0 | 100 | 1000 ml/hl |
| | TBZ + Carvacrol | 0 | 100 | 100 +100ml/hl |
| | | 0 | 100 | 100 +300 ml/hl |
| | | 0 | 100 | 100 +500 ml/hl |
| | | 0 | 100 | 100 +1000 ml/hl |

### Monilinia fructicola

Echantillons :
▪ Xedathane 20
▪ Bioxeda
▪ Xedathane 20+ Bioxeda

| **Champignon Phytopathogène** | **Echantillon** | **Incidence de la maladie (%)** | **Efficacité (%)** | **Dose ml/hl** |
|---|---|---|---|---|
| *Monilinia fructicola* | *Untreated* | 100 | 0 | |
| | Xedathane 20 | 5 | 95 | 250ml/hl |
| | Bioxeda | 75 | 25 | 100ml/hl |
| | | 70 | 30 | 300 ml/hl |
| | | 30 | 70 | 500 ml/hl |
| | | 20 | 80 | 1000 ml/hl |
| | Xedathane 20 + Bioxeda | 0 | 100 | 250 +100ml/hl |
| | | 0 | 100 | 250+300 ml/hl |
| | | 0 | 100 | 250+500 ml/hl |
| | | 0 | 100 | 250+1000 ml/hl |

### Monilinia fructicola - Souche résistante au Pyrimethanil

Echantillons:
▪ Xedathane 20
▪ Bioxeda
▪ Xedathane 20+ Bioxeda

| **Champignon Phytopathogène** | **Echantillon** | **Incidence de la maladie (%)** | **Efficacité (%)** | **Dose ml/hl** |
|---|---|---|---|---|
| *Monilinia fructicola* Souche résistante au Pyrimethanil | *Non traité* | 100 | 0 | |
| | Xedathane 20 | 55 | 45 | 250ml/hl |
| | Bioxeda | 30 | 70 | 100ml/hl |
| | | 20 | 80 | 300 ml/hl |
| | | 25 | 75 | 500 ml/hl |
| | | 20 | 80 | 1000 ml/hl |
| | Xedathane 20 + Bioxeda | 10 | 90 | 250 +100ml/hl |
| | | 5 | 95 | 250+300 ml/hl |
| | | 3 | 97 | 250+500 ml/hl |
| | | 5 | 95 | 250+1000 ml/hl |

### Pseudomonas syringae - Souche résistante aux composés ammonium quaternaires

Echantillons:
▪ Major C 100
▪ Huile de cannelle
▪ Major C 100 + Huile de cannelle

| **Champignon Phytopathogène** | **Echantillon** | **Incidence de la maladie (%)** | **Efficacité (%)** | **Dose ml/hl** |
|---|---|---|---|---|
| *Pseudomonas syringae* Souche résistante aux composés ammonium quaternaire | *Non traité* | 100 | 0 | |
| | Major C 100 | 75 | 25 | 250ml/hl |
| | Huile de cannelle | 70 | 30 | 100ml/hl |
| | | 35 | 65 | 300 ml/hl |
| | | 5 | 95 | 500 ml/hl |
| | | 5 | 95 | 1000 ml/hl |
| | Major + Huile de cannelle | 35 | 65 | 100 +100ml/hl |
| | | 25 | 75 | 100 +300 ml/hl |
| | | 0 | 100 | 100 +500 ml/hl |
| | | 0 | 100 | 100 +1000 ml/hl |

### Conclusion :

Les huiles essentielles végétales montrent un large spectre d'activité contre les champignons, les bactéries phyto-pathogènes, qui peut être résumé de la façon suivante :

### Penicillium spp. :

les champignons sont présents sur 100% des boîtes de pétri non traitées. Le thymol présente une activité modérée (efficacité comprise entre 20 et 70% à dose comprise entre 100 et 1000 ml/hl), tandis que la combinaison de thymol et d'Imazalil permet un contrôle total à toutes les doses testées.

### Penicillium spp., souche résistante à l'imazalil.

Les champignons sont présents sur 100% des boîtes de pétri non traitées. Le thymol présente une forte activité (efficacité comprise entre 70 et 90% à dose comprise entre 100 et 1000 ml/hl). Un contrôle total peut être obtenu par la combinaison d'Imazalil et de thymol à la dose 100 + 1000 ml/hl.

### Botrytis soo., souche résistante au thiabendazole.

Les champignons sont présents sur 100% des boîtes de pétri non traitées.

Le thiabendazole ne présente aucune efficacité à la dose de 100 ml/hl, tandis que le carvacrol permet un contrôle total de cette souche à toutes les doses testées. Il en est de même de la combinaison de thiabendazole et de carvacrol.

### Monilinia fructicola :

Les champignons sont présents sur 100% des boîtes de pétri non traitées.

L'huile de girofle permet un contrôle modéré des champignons à toutes les doses testées, tandis que l'huile de girofle en combinaison avec le pyriméthanil permet un contrôle total des champignons à toutes les doses testées.

### Monilinia fructicola, souche résistante au pyrimethanil :

Le pyriméthanil ne permet qu'une efficacité de 45% tandis que l'huile de girofle permet une efficacité comprise entre 70 et 80% à toutes les doses testées.

La combinaison d'huile de girofle et de pyriméthanil permet un contrôle quasi-total aux doses testées.

### Pseudomonas syringae, souche résistante aux composés de type ammonium quaternaire.

La bactérie est présente sur 100% des boîtes de pétri non traitées.

L'ammonium quaternaire testé ne présente une efficacité que de 25% tandis que l'huile de cannelle permet une efficacité jusqu'à 80% à 1000 ml/hl.

La combinaison de l'ammonium quaternaire avec l'huile de cannelle permet un contrôle total à toutes les doses testées d'huile de cannelle et à une dose inférieure de plus de moitié à la dose de comparaison du composé ammonium quaternaire (100 ml/hl *vs.* 250 ml/hl).

## Revendications

1. Procédé de traitement fongicide d'une ou plusieurs souche(s) de champignon(s) phytopathogène(s) résistante(s) à un ou plusieurs agent(s) fongicide(s) de synthèse comprenant :
- l'application d'une composition comprenant à titre d'huile essentielle l'huile de girofle et/ou à titre d'agent actif terpénique qu'elle contient l'eugénol, et
- l'application de pyriméthanil à titre d'agent fongicide auquel la(es) souche(s) est(sont) résistante(s),
sur des plantes ou denrées alimentaires atteintes par une dite souche.

2. Procédé selon la revendication 1 tel que le pyriméthanil est appliqué simultanément à l'huile de girofle et/ou à l'eugénol, ou de façon séparée.

3. Procédé selon l'une quelconque des revendications 1 ou 2, tel que l'huile de girofle et le pyriméthanil sont appliqués dans un rapport (part huile de girofle / part pyriméthanil) compris entre 0,3 et 3.

4. Procédé selon l'une quelconque des revendications précédentes tel que la(les) souche(s) de champignon(s) phytopathogène(s) résistante(s) à un ou plusieurs agent(s) fongicide(s) est(sont) une(des) souche(s) résistantes choisie(s) parmi celle(s) des genres *Penicillium, Botrytis, Monilinia, Gloeosporium, Phytophtora, Fusarium, Alternaria, Geotrichum, Venturia, Rhizopus, Phoma ou Helminthosporium.*

5. Procédé selon la revendication 4 tel que la(les) souche(s) de champignon(s) phytopathogène(s) résistante(s) à un ou plusieurs agent(s) fongicide(s) est(sont) une(des) souche(s) résistantes choisie(s) parmi celle(s) des espèces *Penicillium spp.,* dont *Penicillium digitatum, Penicillium expansum* ou *Penicillium italicum*; *Botrytis spp.* dont *Botrytis cinerea, Monilinia spp.* dont *Monilinia fructicola, Monilinia fructigena* ou *Monilinia laxa* ; *Gloeosporium spp.* dont *Gloeosporium album, Gloeosporium fructigenum* ou *Gloeosporium perennans ; Phytophtora spp. ; Fusarium spp.* ou encore *Alternaria alternata ; Geotrichum candidum ; Venturia inequalis; Rhizopus nigricans ; Phoma exigua ; ou Helminthosporium Rhizoctonia solani.*

6. Procédé selon la revendication 5 tel que la(les) souche(s) de champignon(s) phytopathogène(s) résistante(s) à un ou plusieurs agent(s) fongicide(s) est(sont) une(des) souche(s) résistantes choisie(s) parmi celle(s) des espèces *Penicillium spp., Penicillium digitatum, Penicillium expansum, Botrytis spp., Botrytis cinerea, Monilinia fructicola.*

7. Procédé selon l'une quelconque des revendications précédentes tel que l'application est réalisée avant ou après récolte.

8. Procédé de traitement selon l'une quelconque des revendications précédentes tel que l'application de ladite composition se fait par aspersion, douchage et/ou immersion.

9. Procédé selon l'une quelconque des revendications précédentes tel que la composition comprend de la lécithine.

10. Procédé selon l'une quelconque des revendications précédentes tel que la composition comprend en outre un ou plusieurs émulsifiants.

11. Procédé selon l'une quelconque des revendications 9 et 10 tel que la composition est sous forme de concentré émulsionnable et que le procédé comprend en outre l'étape préalable de dispersion dudit concentré dans de l'eau avant application.

12. Procédé selon la revendication 11 tel que la dilution dudit concentré avant application se fait à hauteur de 0,5 à 2 % dans de l'eau.

13. Procédé selon l'une quelconque des revendications précédentes tel que ladite composition avant dilution comprend entre 50 et 350 g/L pour l'huile de girofle et entre 20 et 250 g/L pour l'eugénol, avant dilution éventuelle.

## Patentansprüche

1. Verfahren zur Fungizidbehandlung eines oder mehrerer phytopathogener Pilzstämme, der (die) gegen ein oder mehrere synthetische fungizide Mittel resistent ist (sind), das umfasst:
- Anwenden einer Zusammensetzung mit Nelkenöl als essentiellem Öl und/oder als Terpenwirkstoff, damit sie Eugenol enthält, und
- Anwenden von Pyrimethanil als fungizides Mittel, gegen das der Stamm (die Stämme) resistent ist (sind),
auf Pflanzen oder Lebensmittel, die durch einen genannten Stamm angegriffen werden.

2. Verfahren nach Anspruch 1, wobei das Pyrimethanil gleichzeitig auf das Nelkenöl und/oder das Eugenol oder getrennt darauf angewendet wird.

3. Verfahren nach einem der Ansprüche 1 oder 2, wobei das Nelkenöl und das Pyrimethanil in einem Verhältnis (Teil Nelkenöl/Teil Pyrimethanil) im Bereich von 0,3 bis 3 angewendet werden.

4. Verfahren nach einem der vorangehenden Ansprüche, wobei der phytopathogene Pilzstamm (die phytopathogenen Pilzstämme), der (die) gegen ein oder mehrere fungizide Mittel resistent ist (sind), ein resistenter Stamm (resistente Stämme) ist (sind), der (die) aus jenen der Gattungen *Penicillium, Botrytis, Monilinia, Gloeosporium, Phytophtora, Fusarium, Alternaria, Geotrichum, Venturia, Rhizopus, Phoma* oder *Helminthosporium* ausgewählt ist (sind).

5. Verfahren nach Anspruch 4, wobei der phytopathogene Pilzstamm (die phytopathogenen Pilzstämme), der (die) gegen ein oder mehrere fungizide Mittel resistent ist (sind), ein resistenter Stamm (resistente Stämme) ist (sind), der (die) aus jenen der Spezies *Penicillium spp.,* darunter *Penicillium digitatum, Penicillium expansum* oder *Penicillium italicum; Botrytis spp"* darunter *Botrytis cinerea, Monilinia spp.,* darunter *Monilinia fructicola, Monilinia fructigena* oder *Monilinia laxa; Gloeosporium spp"* darunter *Gloeosporium album, Gloeosporium fructigenum* oder *Gloeosporium perennans*; *Phytophtora spp.*; *Fusarium spp.* oder auch *Alternaria alternata*; *Geotrichum candidum*; *Venturia inequalis*; *Rhizopus nigricans*; *Phoma exigua*; oder *Helminthosporium Rhizoctonia solani* ausgewählt ist (sind).

6. Verfahren nach Anspruch 5, wobei der phytopathogene Pilzstamm (die phytopathogenen Pilzstämme), der (die) gegen ein oder mehrere fungizide Mittel resistent ist (sind), ein resistenter Stamm (resistente Stämme) ist (sind), der (die) aus jenen der Spezies *Penicillium spp., Penicillium digitatum, Penicillium expansum, Botrytis spp" Botrytis cinerea, Monilinia fructicola* ausgewählt ist (sind).

7. Verfahren nach einem der vorangehenden Ansprüche, wobei die Anwendung vor oder nach der Ernte ausgeführt wird.

8. Behandlungsverfahren nach einem der vorangehenden Ansprüche, wobei die Anwendung der Zusammensetzung durch Besprühen, Duschen und/oder Eintauchen erfolgt.

9. Verfahren nach einem der vorangehenden Ansprüche, wobei die Zusammensetzung Lecithin umfasst.

10. Verfahren nach einem der vorangehenden Ansprüche, wobei die Zusammensetzung außerdem einen oder mehrere Emulgatoren umfasst.

11. Verfahren nach einem der Ansprüche 9 bis 10, wobei die Zusammensetzung in Form eines emulgierbaren Konzentrats vorliegt und das Verfahren außerdem den vorherigen Schritt der Dispersion des Konzentrats in Wasser vor der Anwendung umfasst.

12. Verfahren nach Anspruch 11, wobei die Verdünnung des Konzentrats vor der Anwendung auf der Höhe von 0,5 bis 2 % in Wasser erfolgt.

13. Verfahren nach einem der vorangehenden Ansprüche, wobei die Zusammensetzung vor der Verdünnung zwischen 50 und 350 g/l für das Nelkenöl und zwischen 20 und 250 g/l für das Eugenol vor der eventuellen Verdünnung umfasst.

## Claims

1. A method for fungicidal treatment of one or more phytopathogenic strain(s) of fungi resistant to one or more synthetic fungicidal agent(s) comprising:
- the application of a composition comprising clove oil as essential oil and/or eugenol as the terpene active ingredient contained therein, and
- the application of pyrimethanil as the fungicidal agent to which said strain(s) is(are) resistant,
on plants or foodstuffs that are infected by a said strain.

2. The method according to claim 1, wherein pyrimethanil is applied simultaneously with clove oil and/or eugenol, or separately.

3. The method according to any one of claims 1 or 2, wherein clove oil and pyrimethanil are applied in a ratio (clove oil part / pyrimethanil part) of between 0.3 and 3.

4. The method according to any one of the previous claims, wherein the strain(s) of phytopathogenic fungi resistant to one or more fungicidal agent(s) is (are) the resistant strain(s) selected from among *Penicillium, Botrytis, Monilinia, Gloeosporium, Phytophtora, Fusarium, Alternaria, Geotrichum, Venturia, Rhizopus, Phoma, or Helminthosporium.*

5. The method according to claim 4, wherein the strain(s) of phytopathogenic fungi resistant to one or more fungicidal agent(s) is (are) the resistant strain(s) selected from among the species *Penicillium spp.,* of which *Penicillium digitatum, Penicillium expansum* or *Penicillium italicum; Botrytis spp.* of which *Botrytis cinerea, Monilinia spp.* of which *Monilinia fructicola, Monilinia fructigena* or *Monilinia laxa*; *Gloeosporium spp.* of which *Gloeosporium album, Gloeosporium fructigenum* or *Gloeosporium perennans; Phytophtora spp.; Fusarium spp.* or even *Alternaria alternata; Geotrichum candidum; Venturia inequalis; Rhizopus nigricans; Phoma exigua; or Helminthosporium Rhizoctonia solani.*

6. The method according to claim 5, wherein the strain(s) of phytopathogenic fungi resistant to one or more fungicidal agent(s) is (are) the resistant strain(s) selected from among the species *Penicillium spp., Penicillium digitatum, Penicillium expansum, Botrytis spp., Botrytis cinerea, Monilinia fructicola.*

7. The method according to any one of the preceding claims, wherein the application is carried out before or after harvesting.

8. The method according to any one of the preceding claims, wherein the application of the said composition is carried out by means of spraying, dipping and/or drenching.

9. The method according to any one of the preceding claims, wherein the composition comprises lecithin.

10. The method according to any one of the preceding claims, wherein the composition comprises, in addition, one or more emulsifiers.

11. The method according to any one of the claims 9 or 10, wherein the composition is in the form of an emulsifiable concentrate and that the method further comprises the preliminary step of dispersing said concentrate in water before application.

12. The method according to claim 11, wherein the dilution before application of said concentrate in water may be carried out up to 0.5 to 2%.

13. The method according to any one of the preceding claims, wherein said composition before dilution comprises between 50 and 350 g/L with respect to clove oil and between 20 and 250 g/L with respect eugenol, before eventual dilution.
